# EUROPÄISCHE PATENTANMELDUNG

(11) **EP 2 390 499 A2**
(43) Veröffentlichungstag der Anmeldung: **30.11.2011**
(21) Anmeldenummer: 11003174.7
(22) Anmeldetag: 15.04.2011
(51) Int. Cl.: F03D 11/00

(54) **Übertragungsvorrichtung**

(30) Priorität: 26.05.2010 DE 102010021642
(71) Anmelder: Robert Bosch GmbH, 70469 Stuttgart (DE)
(72) Erfinder: Hess, Felix, 71642 Ludwigsburg (DE); Buchtala, Boris, Dr., 75417 Mühlacker (DE); Voss, Martin, Dr., 70499 Stuttgart (DE)
(74) Vertreter: Thürer, Andreas

(57) **Zusammenfassung**

Offenbart ist eine Übertragungsvorrichtung zur Strom- und/oder Signalübertragung von einem festen zu einem rotierenden Bauteil für eine Anlage, insbesondere für eine Windkraftanlage. Die Übertragungsvorrichtung hat dabei eine Schleifringübertragungseinheit zur Strom- und/oder Signalübertragung, wobei eine Funkstrecke zur Signalübertragung in fester räumlicher Beziehung zur Schleifringübertragungseinheit angeordnet ist.

## Beschreibung

Die Erfindung betrifft eine Übertragungsvorrichtung zur Strom- und/oder Signalübertragung von einem festen zu einem rotierenden Bauteil für eine Anlage gemäß dem Oberbegriff des Patentanspruchs 1.

Derartige Übertragungsvorrichtungen sind aus dem Stand der Technik hinreichend bekannt und werden zur Übertragung von elektrischer Energie und elektrischen Signalen von einer feststehenden Kontaktiervorrichtung auf einen Rotor oder einer sich drehenden Welle eines Generators oder Elektromotors verwendet. Insbesondere bei Windkraftanlagen wird eine Vielzahl voneinander unabhängiger elektrischer Signale über eine sich drehende Rotorwelle, beispielsweise zur Rotorblattverstellung, übertragen. Als Übertragungsvorrichtung werden Schleifringübertragungseinheiten eingesetzt. Auf einer kreiszylindrischen Umfangsfläche der Welle sind eine Mehrzahl voneinander getrennter Schleifringe benachbart zueinander angeordnet. Ein jeweiliger Schleifring steht dabei mit einem als Bürste ausgebildeten Gleitkontakt elektrisch und mechanisch in Verbindung. Ein Teil der Schleifringe zusammen mit den zugehörigen Gleitkontakten wird zur Stromübertragung verwendet, ein anderer Teil der Schleifringe dient zur Signalübertragung.

Nachteilig bei dieser Lösung ist, dass der mechanischen Kontakt zwischen den Schleifringen und den Gleitkontakten störanfällig ist und bei einem Ausfall keine Strom- oder Signalübertragung mehr stattfindet.

Demgegenüber liegt der Erfindung die Aufgabe zugrunde, eine Übertragungsvorrichtung zur Strom- und/oder Signalübertragung von einem festen zu einem rotierenden Bauteil für eine Anlage zu schaffen, die eine hohe Sicherheit der Strom- und/ oder Signalübertragung gewährleistet.

Diese Aufgabe wird durch eine Übertragungsvorrichtung mit den Merkmalen des Patentanspruchs 1 gelöst.

Erfindungsgemäß weist eine Übertragungsvorrichtung zur Strom- und/oder Signalübertragung von einem festen zu einem rotierenden Bauteil für eine Anlage eine Schleifringübertragungseinheit zur Stromübertragung auf. Die Übertragungsvorrichtung wird insbesondere für eine Windkraftanlage eingesetzt. Zusätzlich hat die Übertragungsvorrichtung eine Funkstrecke zur Signalübertragung, die in fester räumlicher Beziehung zur Schleifringübertragungseinheit angeordnet ist.

Diese Lösung hat den Vorteil, dass die Funkstrecke im Vergleich zu einer zur Signalübertragung eingesetzten Schleifringübertragungseinheit weniger störanfällig ist, wodurch eine höhere Sicherheit bei der Signalübertragung gegeben ist. Durch die feste räumliche Beziehung zwischen Funkstrecke und Schleifringübertragungseinheit ist des Weiteren eine Funkstrecke geschaffen, die im Wesentlichen konstante Eigenschaften aufweist. Wäre die Funkstrecke beispielsweise nicht in fester räumlicher Beziehung zur Schleifringübertragungseinheit, so könnte die Signalübertragung durch die sich ändernde Positionen der Funkstrecke und der Schleifringübertragungseinheit relativ zueinander und die damit verbundenen Änderungen von Randbedingungen die Signalübertragung gestört werden.

Die Anordnung der Funkstrecke relativ zur Schleifringübertragungseinheit erfolgt dabei vorteilhafter Weise derart, dass diese im Wesentlichen konstante Eigenschaften, wie beispielsweise eine Dämpfung und eine Reflektion von Funksignalen, aufweist, wodurch die Signalübertragung weiter verbessert ist. Somit wird die Funkstrecke zur Schleifringübertragungseinheit derart angeordnet, dass die Eigenschaften der Funkstrecke, beispielsweise im Einsatz der Windkraftanlage, im Wesentlichen gleich bleiben und/oder das Funksignal der Funkstrecke im Wesentlichen nicht oder vergleichsweise wenig gestört wird.

Es hat sich als vorteilhaft erwiesen, wenn die Funkstrecke auf oder nahe einer Längsachse einer Schleifringe der Schleifringübertragungseinheit lagernden und als Hohlzylinder ausgebildeten Welle verläuft.

Die Funkstrecke kann dabei durch einen vom Hohlzylinder begrenzten Innenraum verlaufen, wobei, der Hohlzylinder dann als eine Art Schutzmantel für die Funkstrecke dienen kann.

Die Funkstrecke wird vorzugsweise durch zwei Sende- und Empfangseinheiten gebildet.

In weiterer Ausgestaltung der Erfindung sind zwei Schleifringübertragungseinheiten vorgesehen, wodurch bei einem Ausfall einer Einheit redundant zur Sicherheit eine weitere vorhanden ist.

Mit Vorteil weist eine jeweilige Schleifringübertragungseinheit jeweils eine Mehrzahl von entlang der Längsachse des Hohlzylinders versetzt zu einander angeordnete Schleifringe auf. Ein jeweiliger Schleifring ist dabei mit einem Gleitkontakt zur Stromübertragung/Energieübertragung mechanisch kontaktierbar.

Vorzugsweise ist ein Abstand zwischen den Schleifringen und den Gleitkontakten zumindest einer Schleifringübertragungseinheit einstellbar, wodurch diese beispielsweise erst bei einem Ausfall der anderen Schleifringübertragüngseinheit eingesetzt wird.

Zum Einstellen des Abstands kann einfach ein elektromechanischer Aktuator dienen.

Zur Verbindung der Sende- und Empfangseinheiten mit beispielsweise Datenverarbeitungs- oder Messeinrichtungen haben diese jeweils Bussystem-Anschlüsse und/oder Netzwerksystem-Anschlüsse und/oder Analog-Anschlüsse.

Um bei beispielsweise einer Unterbrechung der Stromversorgung der Sende- und Empfangseinheiten diese weiter einsetzen zu können, weisen diese jeweils einen Energiespeicher auf. Hierbei kann es sich um einen Akkumulator oder um ein Supercap handeln.

Bevorzugter Weise ist eine erste Überwachungseinrichtung elektrisch mit den Gleitkontakten und eine zweite elektrisch mit den Schleifringen zur Spannungs- und/ oder Strommessung und/oder Spannungsüberwachung verbunden.

Die Überwachungseinrichtungen tauschen dabei über die Sende- und Empfangseinheiten Kenngrößen der Stromversorgung aus, um die Stabilität der Stromversorgung zu überwachen. Insbesondere werden in den Überwachungseinrichtungen die Versorgungsspannungen gemessen und Spannungseinbrüche detektiert.

Zur weiteren Erhöhung der Sicherheit ist eine Stromversorgung zumindest einer Schleifringübertragungseinheit, insbesondere über einen elektrischen Schütz, ein- und ausschaltbar.

Mit Vorteil ist eine Trennwand zwischen den beiden Schleifringübertragungseinheiten, insbesondere zwischen den Gleitkontakten, angeordnet, um zu vermeiden, dass ein Abrieb oder Materialablösungen von einer Schleifringübertragungseinheit auf die andere, beispielsweise nicht eingesetzte, Schleifringübertragungseinheit übergehen und diese verschmutzen oder beschädigen kann.

Vorzugsweise wird die Übertragungsvorrichtung zwischen einer feststehenden Gondel und einem Rotor in der Windkraftanlage eingesetzt.

Sonstige vorteilhafte Weiterbildungen der Erfindung sind Gegenstand weiterer Unteransprüche.

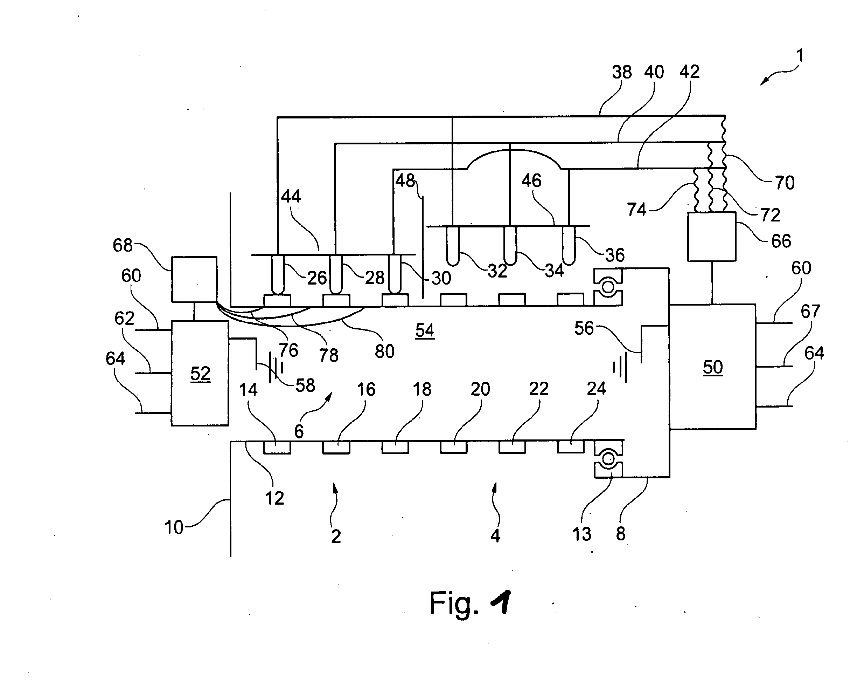

Im Folgenden wird ein bevorzugtes Ausführungsbeispiel der Erfindung anhand einer einzigen Zeichnung näher erläutert. Diese zeigt eine schematische Darstellung einer Übertragungsvorrichtung gemäß einem Ausführungsbeispiel.

In der einzigen Figur ist eine Übertragungsvorrichtung 1 in einer vereinfachten schematischen Darstellung gemäß einem Ausführungsbeispiel abgebildet Diese hat zwei Schleifringübertragungseinheiten 2, 4 zur Stromübertragung/Energieversorgung und eine Funkstrecke 6 zur Signalübertragung von einem festen zu einem rotierenden Bauteil einer Anlage, insbesondere einer Windkraftanlage. Das feste Bauteil ist hierbei eine feststehende Gondel 8 und das rotierende Bauteil ein Rotor 10 einer Windkraftanlage.

Die Schleifringübertragungseinheiten 2 und 4 haben jeweils auf einer Welle 12 angeordnete Schleifringe 14 bis 24, wobei die Welle 12 in der Gondel 8 über eine Wälzlagerung 13 gelagert ist. Die Schleifringe 14 bis 24 sind auf einer Außenmantelfläche der Welle 12 in deren Längsrichtung axial beabstandet zueinander angeordnet. Die Welle 12 ist als Hohlzylinder mit einem etwa kreiszylindrischen Querschnitt ausgebildet. Die drei in der Figur linken Schleifringe 14, 16, 18 sind der Schleifringübertragungseinheit 2 und die drei in der Figur rechten Schleifringe 20, 22, 24 der Schleifringübertragungseinheit 4 zugeordnet. Ein jeweiliger Schleifring 14 bis 24 steht mit einem als Bürste ausgebildeten Gleitkontakt 26 bis 36 in Wirkverbindung. Die in der Figur linken Gleitkontakte 26 bis 30 sind dabei mit den linken Schleifringen 14 bis 18 mechanisch in Verbindung, während die drei rechten Gleitkontakte 32 bis 36 zu den drei rechten Schleifringen 20 bis 24 beabstandet sind. Die Gleitkontakte 26 bis 36 sind über Stromzuführungen 38, 40, 42 elektrisch kontaktiert. Die Gleitkontakte 26 und 32 sind mit der Stromzuführung 38, die Gleitkontakte 28 und 34 mit der Stromzuführung 40 und die Gleitkontakte 30 und 36 mit der Stromzuführung 42 jeweils über einen Schütz oder Umschalter verbunden (die Schütze/der Umschalter sind in der Zeichnung nicht dargestellt). Stromzuführungen von den Schleifringen 14 bis 24 sind in der Figur nicht dargestellt.

Die Gleitkontakte 26, 28, 30 der Schleifringübertragungseinheit 2 und die Gleitkontakte 32, 34, 36 der Schleifringübertragungseinheit 4 sind jeweils über einen elektromechanischen Aktuator 44 bzw. 46 relativ zu den jeweils zugeordneten Schleifringen 14 bis 24 derart verschiebbar, das ein mechanischer und somit elektrischer Kontakt hergestellt oder unterbrochen werden kann. Beispielsweise beim Auftreten einer Störung bei der Stromübertragung der Schleifringübertragungseinheit 2 kann die andere Schleifringübertragungseinheit 4 zur weiteren Stromübertragung eingesetzt werden. Hierzu werden dann die Gleitkontakte 32 bis 36 mit den Schleifringen 20 bis 24 in mechanischen und elektrischen Kontakt durch Verringerung des Abstands zwischen diesen Elementen über den Aktuator 46 gebracht, indem dieser die Gleitkontakte 32 bis 36 radial bezüglich der Welle 12 verschiebt. Im Gegenzug kann der mechanische und elektrische Kontakt der linken Schleifringe 14 bis 18 mit den Gleitkontakten 26 bis 30 der Schleifringübertragungseinheit 2 durch den Aktuator 44 unterbrochen werden, indem dieser die Gleitkontakte 26 bis 30 radial von der Welle 12 weg bewegt. Somit kann bei einer Störung einer Schleifringübertragungseinheit 2 oder 4 die jeweils andere störungsfreie Schleifringübertragungseinheit 2 oder 4 eingesetzt werden, womit eine unterbrechungsfreie Stromversorgung zwischen dem Rotor 10 und der Gondel 8 gewährleistet ist. Um Störungen bei Übertragungsvorrichtungen gemäß dem Stand der Technik zu verringern werden häufige Wartungen in kurzen Intervallen, insbesondere zur Überprüfung der Schleifringübertragungseinheit, durchgeführt. Durch die erfindungsgemäße zusätzliche Schleifringübertragungseinheit 2 bzw. 4 können Wartungsintervalle verlängert werden.

Damit Abrieb und Materialablösungen einer Schleifringübertragungseinheit 2 bzw. 4 nicht zur Störung der jeweils anderen Schleifringübertragungseinheit 2 bzw. 4 führen, ist eine Trennwand 48 vorgesehen, die zwischen den beiden Schleifringübertragungseinheiten 2, 4 angeordnet ist. Diese erstreckt sich dabei im Wesentlichen zwischen den aneinander angrenzenden Gleitkontakten 30 und 32 der Schleifringübertragungseinheit 2 bzw. 4.

Bei Windkraftanlagen ist es notwendig, Steuer- und Messsignale zwischen der Gondel 8 und dem Rotor 10 zu übertragen, um beispielsweise die Stellung von Rotorblättern des Rotors zu steuern und deren Position zu messen. Die zur Positionsveränderung des Rotorblatts dienenden Einrichtungen werden dabei über die Schleifringübertragungseinheiten 2 bzw. 4 mit elektrischem Strom versorgt. Zur Übertragung von elektrischen Signalen, also beispielsweise Steuer- und Messsignalen, dient die Funkstrecke 6. Diese ist zwischen zwei Sende- und Empfangseinheiten 50, 52 angeordnet. Die in der Figur rechte Einheit 50 ist dabei drehfest mit der Gondel 8 und die in der Figur linke Einheit 52 drehfest mit dem Rotor 10 verbunden. Die beiden Einheiten 50, 52 sind dabei derart angeordnet, dass die Funkstrecke 6 sich im Wesentlichen durch den Innenraum 54 der hohlzylindrischen Welle 12 erstreckt. Sende- und Empfangsantennen 56 und 58 der Einheit 50 bzw. 52 sind etwa im Bereich einer Rotationsachse der Welle 12 angeordnet. Durch diese feste räumliche Beziehung zwischen den Einheiten 50 und 52 und den Schleifringübertragungseinheiten 2, 4 ist die räumliche Anordnung der Funkstrecke 6 im Wesentlichen konstant, was zu einer zuverlässigen und sicheren Funkübertragung führt.

Zur Minimierung von äußeren Einflüssen und Störungen auf die Funkstrecke 6 und zur optimalen Übertragung des Funksignals sind vorteilhafte Ausgestaltungen der Schleifringübertragungseinheiten 2, 4 zusammen mit der Welle 12 ausführbar. Die Schleifringübertragungseinheiten 2, 4 werden dabei derart ausgestaltet, dass eine optimale Funkstrecke für eine gewählte Übertragungsfrequenz ausgebildet wird. Hierbei ist vorgesehen, einen Innendurchmesser des Innenraums 54 der Welle 12 entsprechend anzupassen und eine Innenmantelfläche der Welle 12 mit Materialien auszukleiden, welche zu einer Reflektion und Dämpfung des Funksignals dienen. Die Welle 12 bildet des Weiteren eine Art Schutzmantel, um die Funkstrecke 6 vor äußeren Einflüssen und Störungen abzuschirmen.

Die Sende- und Empfangseinheiten 50, 52 haben unterschiedliche Anschlussmöglichkeiten, um Steuer- und Messeinrichtungen oder Datenverarbeitungseinrichtungen anzuschließen. Eine jeweilige Einheit 50, 52 weist dabei einen Bussystem-Anschluss 60, einen Netzwerksystem-Anschluss 62 und/ oder einen Analog-Anschluss 64 auf. Um eine Signalübertragung zwischen den Einheiten 50, 52 auch bei unterbrochener Stromversorgung dieser Einheiten 50, 52 zu gewährleisten, haben diese jeweils einen Akkumulator oder ein Supercap. Eine Übertragung der Signale erfolgt über die Funkstrecke 6 per Multiplex-Verfahren.

An die Sende- und Empfangseinheiten 50 und 52 ist jeweils eine Überwachungseinrichtung 66 bzw. 68 angeschlossen. Die in der Figur rechte Überwachungseinrichtung 66 ist über elektrische Messleitungen 70, 72 und 74 mit einer jeweiligen Stromzuführung 38, 40 bzw. 42 elektrisch verbunden, während die in der Figur linke Überwachungseinrichtung 68 über elektrische Messleitungen 76, 78 und 80 mit dem Stromversorgungsnetz der Nabe elektrisch verbunden ist. Die Überwachungseinrichtung 66 überwacht dabei die Spannung der Stromzuführungen 38 bis 42 und die Überwachungseinrichtung 68 die Spannungen im Stromnetz der Nabe. Über die Sende- und Empfangseinheiten 50 und 52 tauschen die daran angeschlossenen Überwachungseinrichtungen 66 bzw. 68 über die Funkstrecke 6 Kenngrößen über die Stabilität der Stromversorgung aus. Dabei werden insbesondere die Versorgungsspannungen gemessen und Spannungseinbrüche detektiert. Erkennt beispielsweise die rotorseitige Überwachungseinrichtung 68 einen Spannungseinbruch, der gondelseitig von der Überwachungseinrichtung 66 nicht gemessen wird, so deutet dies auf eine Störung zwischen den Schleifringen 14 bis 18 und den Gleitkontakten 26 bis 30 hin. Um die Stromversorgung des Rotors 10 zu sichern, wird in diesem Fall die zweite Schleifringübertragungseinheit 4 aktiviert, indem die Schleifringe 20 bis 24 mit den Gleitkontakten 30 bis 36 elektrisch und mechanisch über den Aktuator 46, wie oben bereits erläutert, aktiviert wird. Die Schleifringübertragungseinheit 2 kann im Gegenzug deaktiviert werden, indem die Schleifringe 14 bis 16 und die Gleitkontakte 26 bis 30 über den Aktuator 44 elektrisch und mechanisch voneinander getrennt werden.

Zusätzlich oder alternativ zur Herstellung oder Unterbrechung des elektrischen und mechanischen Kontakts der Schleifringübertragungseinheiten 2, 4 über die Aktuatoren 44, 46 sind die Schleifringübertragungseinheiten 2, 4 gondel- und/oder rotorseitig ein- und ausschaltbar. Hierzu ist jeweils ein elektronischer Schütz vorgesehen. Dies hat den Vorteil, dass bei einem Kurzschluss.einer Schleifringübertragungseinheit 2, 4 diese spannungslos geschaltet werden kann, womit ein Weiterbetrieb der Windkraftanlage ermöglicht ist.

Es ist denkbar, dass die Übertragungsvorrichtung 1 nur eine Schleifringübertragungseinheit 2 oder 4 aufweist, womit der vorrichtungstechnische Aufwand gesenkt werden würde. Allerdings wäre hierbei keine redundante Stromübertragung mehr möglich, wodurch bei einer Störung der Schleifringübertragungseinheit die Stromversorgung zwischen Gondel 8 und Rotor 10 unterbrochen wäre. Des Weiteren ist denkbar, dass eine oder beide Schleifringübertragungseinheiten 2, 4 zusätzlich zur Signalübertragung eingesetzt sind.

Offenbart ist eine Übertragungsvorrichtung zur Strom- und/oder Signalübertragung von einem festen zu einem rotierenden Bauteil für eine Anlage, insbesondere für eine Windkraftanlage. Die Übertragungsvorrichtung hat dabei eine Schleifringübertragungseinheit zur Strom- und/oder Signalübertragung, wobei eine Funkstrecke zur Signalübertragung in fester räumlicher Beziehung zur Schleifringübertragungseinheit angeordnet ist. Hierdurch kann die Funkstrecke einfach ausgelegt werden, da die Randbedingungen zwischen der Schleifringübertragungseinheit und der Funkstrecke und somit ein Einfluss der Schleifringübertragungseinheit auf die Funkstrecke aufgrund geometrischer Ausgestaltungen durch die im Wesentlichen gleichbleibende räumliche Anordnung einfach kalkulierbar sind.

### Bezugszeichenliste:

- 1: Übertragungsvorrichtung
- 2, 4: Schleifringübertragungseinheit
- 6: Funkstrecke
- 8: Gondel
- 10: Rotor
- 12: Welle
- 13: Wälzlager
- 14, 16, 18, 20, 22, 24: Schleifringe
- 26, 28, 30, 32, 34, 36: Gleitkontakt
- 38, 40, 42: Stromzuführung
- 44, 46: Aktuator
- 48: Trennwand
- 50, 52: Sende- und Empfangseinheit
- 54: Innenraum
- 56,58: Antenne
- 60: Bussystem-Anschluss
- 62: Netzwerksystem-Anschluss
- 64: Analog-Anschluss
- 66, 68: Überwachungseinrichtung
- 70, 72, 74, 76, 78, 80: Messleitung

## Patentansprüche

1. Übertragungsvorrichtung zur Strom- und/oder Signalübertragung von einem festen zu einem rotierenden Bauteil (8, 10) für eine Anlage, insbesondere für eine Windkraftanlage, mit einer Schleifringübertragungseinheit (2, 4) zur Strom- und/oder Signalübertragung, **dadurch gekennzeichnet, dass** eine Funkstrecke (6) zur Signalübertragung in fester räumlicher Beziehung zur Schleifringübertragungseinheit (2, 4) angeordnet ist.

2. Übertragungsvorrichtung nach Anspruch 1, wobei die Anordnung der Funkstrecke (6) derart erfolgt, dass diese im Wesentlichen konstante Eigenschaften aufweist.

3. Übertragungsvorrichtung nach Anspruch 1 oder 2, wobei die Funkstrecke (6) auf oder nahe einer Längsachse einer Schleifringe (14 bis 24) der Schleifringübertragungseinheit (2, 4) lagernden und als Hohlzylinder ausgebildeten Welle (12) verläuft.

4. Übertragungsvorrichtung nach Anspruch 3, wobei die Funkstrecke (6) im Wesentlichen durch einen vom Hohlzylinder begrenzten Innenraum (54) verläuft.

5. Übertragungsvorrichtung nach einem der vorhergehenden Ansprüche, wobei die Funkstrecke (6) zwischen zwei Sende- und Empfangseinheiten (50, 52) verläuft.

6. Übertragungsvorrichtung nach einem der vorhergehenden Ansprüche, wobei zwei Schleifringübertragungseinheiten (2, 4) vorgesehen sind.

7. Übertragungsvorrichtung nach Anspruch 6, wobei eine jeweilige Schleifringübertragungseinheit (2, 4) jeweils eine Mehrzahl von entlang der Längsachse der Welle (12) versetzt zueinander angeordnete Schleifringe (14 bis 24) aufweist, wobei jeweils ein Schleifring (14 bis 24) mit einem Gleitkontakt (26 bis 36) zur Strom- und/oder Signalübertragung zusammenwirkt.

8. Übertragungsvorrichtung nach Anspruch 7, wobei ein Abstand zwischen den Schleifringen (14 bis 24) und den Gleitkontakten (26 bis 36) zumindest einer Schleifringübertragungseinheit (2, 4) einstellbar ist.

9. Übertragungsvorrichtung nach Anspruch 8, wobei ein elektromechanischer Aktuator (44, 46) zum Einstellen des Abstands vorgesehen ist.

10. Übertragungsvorrichtung nach einem der Ansprüche 5 bis 9, wobei die Sende- und Empfangseinheiten (50, 52) jeweils Bussystem-Anschlüsse (60) und/oder Netzwerksystem-Anschlüsse (63) und/oder Analog-Anschlüsse (64) aufweisen.

11. Übertragungsvorrichtung nach einem der Ansprüche 5 bis 10, wobei die Sende- und Empfangseinheiten (50, 52) jeweils einen Energiespeicher, insbesondere einen Akkumulator oder ein Supercap, aufweisen.

12. Übertragungsvorrichtung nach einem der vorhergehenden Ansprüche, wobei eine erste Überwachungseinrichtung (68) eine Spannung und/oder einen Strom der Schleifringübertragungseinheit (2, 4) auf Seiten des rotierenden Bauteils und eine zweite Überwachungseinrichtung (66) den Spannung und/oder den Strom der Schleifringübertragungseinheit (2, 4) auf Seiten des festen Bauteils überwacht.

13. Übertragungsvorrichtung nach Anspruch 12, wobei die erste Überwachungseinrichtung (68) mit der dem rotierenden Bauteil zugeordneten Sende- und Empfangseinheit (52) und die zweite Überwachungseinrichtung (66) mit der dem festen Bauteil zugeordneten Sende- und Empfangseinheit (50) elektrisch zur Übertragung von Messwerten verbunden ist.

14. Übertragungsvorrichtung nach einem der vorhergehenden Ansprüche, wobei eine Stromversorgung zumindest einer Schleifringübertragungseinheit (2, 4), insbesondere über einen elektronischen Schütz, ein- und ausschaltbar ist.

15. Übertragungsvorrichtung nach einem Ansprüche 6 bis 14, wobei eine Trennwand (48) zwischen den benachbarten Gleitkontakten (30, 32) und den Schleifringen (18, 20) der Schleifringübertragungseinheiten (2, 4) angeordnet ist.
